(19) Europäisches Patentamt

European Patent Office

Office européen des brevets

(11) **EP 3 492 540 A1**

(12) **EUROPÄISCHE PATENTANMELDUNG**

(43) Veröffentlichungstag:
**05.06.2019 Patentblatt 2019/23**

(51) Int Cl.:
*C09D 163/00* [(2006.01)]   *C08L 63/00* [(2006.01)]
*C09D 5/34* [(2006.01)]   *C09J 163/00* [(2006.01)]

(21) Anmeldenummer: **18208130.7**

(22) Anmeldetag: **23.11.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **30.11.2017   DE 202017107320 U**

(71) Anmelder: **Airbus Operations GmbH**
**21129 Hamburg (DE)**

(72) Erfinder:
• **Schönbeck, Thomas**
**21129 Hamburg (DE)**
• **Roye, Thorsten**
**21129 Hamburg (DE)**

(54) **TOLERANZKOMPENSATIONS- UND DICHTMITTEL**

(57)    Aushärtbares Material zum gleichzeitigen Füllen von Toleranzen und zum Abdichten von zu verbindenden Bauteilen im Flugzeugbau.

FIG 5

EP 3 492 540 A1

**Beschreibung**

**Gebiet der Erfindung**

Die Erfindung betrifft ein neuartiges Mittel zum gleichzeitigen Kompensieren von Toleranzen und zum Abdichten, insbesondere zur Verwendung in Luftfahrzeugen, insbesondere in Verkehrsflugzeugen.

**Hintergrund der Erfindung**

Moderne Leichtbauweisen haben den Fahrzeugbau, ob dies nun Schiffe, Flugzeuge, Automobile oder Schienenfahrzeuge sind, in der jüngeren Vergangenheit stark verändert. So führt die Verwendung geeigneter Materialien zu Verbesserungen hinsichtlich Gewicht, Sicherheit und Komfort.

Daher werden Bauteile aus kohlenstofffaserverstärktem Kunststoff (CFK, englisch CFRP) im Flugzeugbau verbreitet eingesetzt. Solche Bauteile sind sehr toleranzbehaftet und müssen daher vor der Montage mit Materialien zur Spaltschließung, so genanntes Shimmen, sowie Dichtmitteln bearbeitet werden. Danach werden eine Vielzahl an Bohrungen sowie Nieten in die Bauteile eingebracht um diese zueinander zu fixieren.

Mittel zum Kompensieren von Toleranzen (Shimming) sind Ausgleichsmaterialien zur Erzielung einer definierten Dicke eines Bauteils. Sie füllen Lücken, können in flüssiger, aushärtbarer Form vorliegen und sind nach dem Aushärten steif und starr. Bei den Shim-Materialien handelt es sich in der Regel um 2-komponentige Epoxidharze, die ein Spaltfüllungsvermögen von ca. 2-3 mm und eine Aushärtzeit von 8 h bei Raumtemperatur besitzen. Größere Spalte werden mittels Feststoff-Shims aus Faserverbundmaterial zeitaufwendig manuell ausgeglichen. Es kann auch eine Kombination aus flüssigen und festen Schim-Materialien eingesetzt werden. Insgesamt erfolgt die Verarbeitung der Shim-Materialien im wesentlichen manuell und erfordert eine hohen Zeitaufwand, insbesondere da die Fügepartner zur Bestimmung der Spaltmaße provisorisch gefügt werden und danach die Fügepartner für die Ausführung der weiteren Verfahrensschritte wieder auseinander gefahren werden müssen. Dichtmittel dienen dazu das Eindringen von unerwünschten Medien, wie etwa Feuchtigkeit zu verhindern und weisen eine gewisse Elastizität und Flexibilität auf. Daher ist es nicht möglich, das Mittel zum Toleranzausgleich zugleich als Dichtmittel zu verwenden: Vor der Endmontage eines mit einem Mittel zum Toleranzausgleich behandelten Bauteils ist oft eine zusätzliche Zwischenschicht-Dichtmasse erforderlich. Die Weiterverarbeitung solcher Bauteile erfolgt oft durch Bohren und Nieten, das weder das Mittel zum Toleranzausgleich, noch das Dichtmittel als strukturelles Klebemittel geeignet sind.

Es fehlte an einem Material, das fest genug ist um Spalte zu füllen, flexibel genug um Dichtigkeit sicherzustellen und darüber hinaus jegliche Kräfte aufnehmen kann um eine nietfreie Strukturelle Klebung zu gewährleisten.

**Beschreibung der Erfindung**

Es hat sich nun für den Fachmann völlig überraschend herausgestellt, dass ein Aushärtbares Material zum gleichzeitigen Füllen von Toleranzen und zum Abdichten von zu verbindenden Bauteilen im Flugzeugbau den Nachteilen des Standes der Technik abhilft. Dabei ist es bevorzugt, wenn die zu verbindenden Bauteilen im Flugzeugbau aus faserverstärktem Kunststoff (CFK) bestehen. Dabei ist es bevorzugt, wenn das Material gleichzeitig ein strukturelles Verkleben ermöglicht. Dabei ist es bevorzugt, wenn das Material auf Basis von Zweikomponenten-Epoxidharz formuliert wird. Dabei ist es bevorzugt, wenn sein E-Modul nicht linear von Schbspannung und Auslenkung abhängig ist. E-Modul:

$$E = \frac{\sigma}{\varepsilon} \quad \text{mit} \quad \sigma = tension, \varepsilon = elognation$$

Dabei ist es bevorzugt, wenn das Material ein E-Modul aufweist, das der Formel :

$$E(t) = \frac{\sigma(t)}{\varepsilon}$$

folgt mit s =Schubspannung, e=Auslenkung und t =Zeit.

Das bedeutet, dass das Material unter dem Einfluss eines plötzlichen starken Impulses, ein hohes E-modul aufweist und unter dem Einfluß normaler, über dem gegenüber längeren Zeiträumen einwirkenden Impulsen ein niedriges E-Modul aufweist.

Dabei ist es bevorzugt, wenn das Material bohrbar ist. Dabei ist es bevorzugt, wenn das Material eine Klebrigkeit aufweist, um die verklebten Komponenten fest, aber flexibel zueinander zu halten. Dabei ist es bevorzugt, wenn seine Aushärtbarkeit bei -55°C bis 120°C, bevorzugt unter 90°C besteht.

Die oben beschriebenen Aspekte und weitere Aspekte, Merkmale und Vorteile der Erfindung können ebenfalls aus den Beispielen der Ausführungsformen entnommen werden, welche im Folgenden unter Bezugnahme auf die anhängenden Zeichnungen beschrieben werden.

**Beschreibung von Ausführungsformen**

In den Figuren werden gleiche Bezugszeichen für gleiche oder zumindest ähnliche Elemente, Komponenten oder Aspekte verwendet. Es wird angemerkt, dass im Folgenden Ausführungsformen im Detail beschrieben werden, die lediglich illustrative und nicht beschränkend sind.

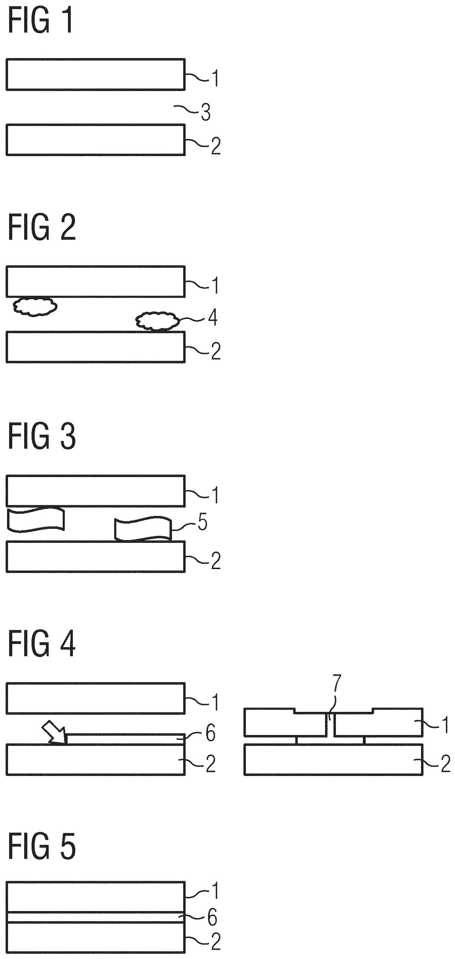

Figur 1 zeigt zwei Bauteile (1) und (2) zwischen denen sich ein toleranzbedingter Spalt (3) befindet.
Figur 2 zeigt zeigt zwei Bauteile (1) und (2), deren zueinander weisende Oberflächen aktiviert (4) werden. Dies kann physikalisch (z.B. Schleifen, Corona) oder chemisch (z.B. Ätzen) erfolgen.
Figur 3 zeigt zeigt zwei Bauteile (1) und (2), deren zueinander weisende Oberflächen gereinigt (5) werden.
Figur 4 zeigt zeigt zwei Bauteile (1) und (2), in deren toleranzbedingten Spalt (3) ein erfindungsgemäßes Mittel (6) positioniert wird. Es handelt sich um ein 2-Komponenten Epoxidharz, das nach dem Aushärten ein von der Scherbeanspruchung abhängiges E-Modul aufweist. In einer weiteren Ausführungsform wird das erfindungsgemäße Mittel (7) zwischen zwei aneinander stoßende Bauteile (1) eingespritzt um sowohl den vertikalen Spalt zwischen den beiden Bauteilen (1), als auch den Spalt zwischen den Bauteilen (1) und (2) zu füllen und zu dichten.
Figur 5 zeigt zeigt zwei Bauteile (1) und (2), die durch erfindungsgemäßes Mittel (6) verbunden sind.

Während die Erfindung illustriert und beschrieben wurde im Detail in den Zeichnungen und der vorangegangenen Beschreibung, ist es beabsichtigt, dass derartige Illustrationen und Beschreibungen lediglich illustrativ oder exemplarisch und nicht restriktiv sind, so dass die Erfindung nicht durch die offenbarten Ausführungsformen beschränkt ist. In den Ansprüchen schließt das Wort "aufweisend" nicht andere Elemente aus und der unbestimmte Artikel "ein" schließt eine Mehrzahl nicht aus.

Alleinig der Umstand, dass bestimmte Merkmale in verschiedenen abhängigen Ansprüchen genannt sind, beschränkt nicht den Gegenstand der Erfindung. Auch Kombinationen dieser Merkmale können vorteilhaft eingesetzt werden. Die Bezugszeichen in den Ansprüchen sollen nicht den Umfang der Ansprüche beschränken.

**Bezugszeichenliste**

1     Bauteil
2     Bauteil
3     Spalt
4     Mittel zum Aktivieren der Oberflächen
5     Mittel zum Reinigen der Oberflächen
6     Erfindungsgemäßes Mittel
7     Injektion von erfindungsgemäßem Mittel

**Patentansprüche**

**1.** Aushärtbares Material zum gleichzeitigen Füllen von Toleranzen und zum Abdichten von zu verbindenden Bauteilen im Flugzeugbau.

**2.** Aushärtbares Material zum gleichzeitigen Füllen von Toleranzen und zum Abdichten von zu verbindenden Bauteilen im Flugzeugbau aus faserverstärktem Kunststoff (CFK).

**3.** Aushärtbares Material nach einem der vorangehenden Ansprüche das gleichzeitig strukturelles Verkleben ermöglicht.

**4.** Aushärtbares Material nach einem der vorangehenden Ansprüche auf Basis von Zweikomponenten-Epoxidharz.

**5.** Aushärtbares Material nach einem der vorangehenden Ansprüche dessen E-Modul nicht linear von Schbspannung und Auslenkung abhängig ist.

**6.** Aushärtbares Material nach einem der vorangehenden Ansprüche dessen E-Modul der Formel:

$$E(t) = \frac{\sigma(t)}{\varepsilon}$$

folgt mit s =Schubspannung, e=Auslenkung und t =Zeit.

**7.** Aushärtbares Material nach einem der vorangehenden Ansprüche **dadurch gekennzeichnet, dass** es bohrbar ist.

**8.** Aushärtbares Material nach einem der vorangehenden Ansprüche aufweisend eine Klebrigkeit, um die verklebten Komponenten fest, aber flexibel zueinander zu halten.

**9.** Aushärtbares Material nach einem der vorangehenden Ansprüche aufweisend eine Aushärtbarkeit bei -55°C bis 120°C, bevorzugt unter 90°C.

# FIG 1

1

3

2

# FIG 2

1

4

2

# FIG 3

1

5

2

# FIG 4

1

6

2

7

1

2

# FIG 5

1

6

2

Europäisches Patentamt

European Patent Office

Office européen des brevets

# EUROPÄISCHER RECHERCHENBERICHT

Nummer der Anmeldung

EP 18 20 8130

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 818 492 A1 (3M INNOVATIVE PROPERTIES CO [US]) 31. Dezember 2014 (2014-12-31) * Absätze [0078] - [0081]; Ansprüche 1-15; Beispiel 1 * ----- | 1-9 | INV. C09D163/00 C08L63/00 C09D5/34 C09J163/00 |
| X | EP 3 072 937 A1 (BOEING CO [US]) 28. September 2016 (2016-09-28) * Absätze [0055], [0056]; Ansprüche 1-15; Abbildungen 1-8 * ----- | 1-9 | |
| X | WO 2008/077918 A1 (SIKA TECHNOLOGY AG [CH]; SCHULENBURG JAN OLAF [CH]; GUTGSELL MICHAEL []) 3. Juli 2008 (2008-07-03) * Seite 35, Zeilen 9-11; Ansprüche 1-9,18, 24; Abbildungen 1-5 * ----- | 1-9 | |

RECHERCHIERTE SACHGEBIETE (IPC)

C09J
C09D
C08L

Der vorliegende Recherchenbericht wurde für alle Patentansprüche erstellt

| Recherchenort | Abschlußdatum der Recherche | Prüfer |
|---|---|---|
| München | 18. März 2019 | Schmitt, Johannes |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 20 8130

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-03-2019

| Im Recherchenbericht angeführtes Patentdokument | Datum der Veröffentlichung | Mitglied(er) der Patentfamilie | Datum der Veröffentlichung |
|---|---|---|---|
| EP 2818492 A1 | 31-12-2014 | BR 112015032722 A2 | 25-07-2017 |
| | | CA 2917013 A1 | 31-12-2014 |
| | | CN 105339412 A | 17-02-2016 |
| | | EP 2818492 A1 | 31-12-2014 |
| | | ES 2673735 T3 | 25-06-2018 |
| | | JP 2016523313 A | 08-08-2016 |
| | | JP 2018123336 A | 09-08-2018 |
| | | KR 20160025567 A | 08-03-2016 |
| | | PL 2818492 T3 | 31-07-2018 |
| | | US 2016152879 A1 | 02-06-2016 |
| | | WO 2014210298 A1 | 31-12-2014 |
| EP 3072937 A1 | 28-09-2016 | CN 106008927 A | 12-10-2016 |
| | | EP 3072937 A1 | 28-09-2016 |
| | | JP 2016216702 A | 22-12-2016 |
| | | US 2016280867 A1 | 29-09-2016 |
| WO 2008077918 A1 | 03-07-2008 | AT 546501 T | 15-03-2012 |
| | | CN 101605859 A | 16-12-2009 |
| | | EP 1935955 A1 | 25-06-2008 |
| | | EP 2134799 A1 | 23-12-2009 |
| | | JP 5317985 B2 | 16-10-2013 |
| | | JP 2011508792 A | 17-03-2011 |
| | | US 2010266809 A1 | 21-10-2010 |
| | | WO 2008077918 A1 | 03-07-2008 |

EPO FORM P0461

Für nähere Einzelheiten zu diesem Anhang : siehe Amtsblatt des Europäischen Patentamts, Nr.12/82